# EUROPEAN PATENT APPLICATION

(11) **EP 4 322 044 A1**
(43) Date of publication of application: **14.02.2024**
(21) Application number: 22836029.3
(22) Date of filing: 04.08.2022
(51) Int. Cl.: G06F 30/327, G06F 30/33

(54) **INSPECTION METHOD AND APPARATUS FOR DATA PROCESSING CIRCUIT, AND ELECTRONIC DEVICE**

(30) Priority: 30.06.2022 CN 202210756180
(71) Applicant: Changxin Memory Technologies, Inc., Hefei, Anhui 230601 (CN)
(72) Inventor: WU, Zengquan, Hefei, Anhui 230601 (CN)
(74) Representative: Lavoix
(86) International application number: PCT/CN2022/110317
(87) International publication number: WO 2024/000730

(57) **Abstract**

The disclosure provides a method and an apparatus for checking a data processing circuit, and an electronic device. Performance check files of a plurality of timing sequence logic elements in the data processing circuit are acquired, and the data processing circuit is simulated based on the performance check files of the plurality of timing sequence logic elements, so as to obtain timing sequence information of the respective timing sequence logic elements. Therefore, the disclosure can check the timing sequence of the data processing circuit, which prevents the data processing circuit from failing to pass Command Bus Training (CBT), a relevant regulation check, etc. due to a great difference in timing sequence information, ensures that the data processing circuit can correctly process a signal, and improves the effectiveness of the data processing circuit during designing and using.

## Description

### CROSS-REFERENCE TO RELATED APPLICATION

The present application claims priority from Chinese Patent Application No. 202210756180.0, filed to the China National Intellectual Property Administration on June 30, 2022 and entitled "METHOD AND APPARATUS FOR CHECKING DATA PROCESSING CIRCUIT, AND ELECTRONIC DEVICE", the disclosure of which is hereby incorporated by reference in its entirety.

### TECHNICAL FIELD

The disclosure relates to the technical field of semiconductors, and in particular, to a method and an apparatus for checking a data processing circuit, and an electronic device.

### BACKGROUND

A Low Power Double Data Rate (LPDDR) is a communication standard for semiconductor devices. In the semiconductor devices adopting the standards, such as LPDDR5, a data processing circuit may receive an input data signal within one cycle of a clock signal, and perform processes such as sampling and decoding on the received data signal based on the clock signal to obtain a data operation command.

How to check timing sequence information of the data processing circuit and ensure that the data processing circuit can correctly process the data signal are technical problems to be solved in the art.

### SUMMARY

The disclosure provides a method and an apparatus for checking a data processing circuit, and an electronic device, which can check the timing sequence information of the data processing circuit.

A first aspect of the disclosure provides a method for checking a data processing circuit, which includes that: performance check files of a plurality of timing sequence logic elements in the data processing circuit are acquired; and the data processing circuit is simulated based on the performance check files of the plurality of timing sequence logic elements, and obtaining timing sequence information of the respective timing sequence logic elements.

In an embodiment of the first aspect of the disclosure, the plurality of timing sequence logic elements may include: input ends and latches. The input end may be connected to the latch.

In an embodiment of the first aspect of the disclosure, the timing sequence information may include at least one of a first setup time and a first hold time of a rising edge of a clock signal when the input end receives a data signal according to the clock signal; a second setup time and a second hold time of a falling edge of the clock signal when the input end receives the data signal according to the clock signal; a third setup time and a third hold time of a rising edge of a sampling signal when the latch samples the data signal according to the sampling signal; and a fourth setup time and a fourth hold time of a falling edge of the sampling signal when the latch samples the data signal according to the sampling signal.

In an embodiment of the first aspect of the disclosure, after the timing sequence information of the respective timing sequence logic elements is obtained, the method may further include that: identifiers and the timing sequence information of the timing sequence logic elements are displayed on a display device.

In an embodiment of the first aspect of the disclosure, after the identifiers and the timing sequence information of the timing sequence logic elements are displayed on a display device, the method may further include that: whether the data processing circuit satisfies a preset condition is determined according to the timing sequence information.

In an embodiment of the first aspect of the disclosure, the preset condition may include that: the timing sequence information of all input ends of the data processing circuit is within a first preset range.

In an embodiment of the first aspect of the disclosure, the preset condition may include that: the timing sequence information of all latches of the data processing circuit is within a second preset range.

In an embodiment of the first aspect of the disclosure, the preset condition may include that: in the data processing circuit, the difference between the timing sequence information of all input ends and the timing sequence information of the latches connected to the input ends is within a third preset range.

In an embodiment of the first aspect of the disclosure, the method may further include that: function check is performed on the data processing circuit in response to determining that the data processing circuit satisfies the preset condition.

In an embodiment of the first aspect of the disclosure, the method may further include that: a delay of the clock signal and/or the data signal is adjusted in response to determining that the data processing circuit does not satisfy the preset condition, so that the data processing circuit satisfies the preset condition.

In an embodiment of the first aspect of the disclosure, before performance check files of a plurality of timing sequence logic elements in the data processing circuit are acquired, the method may further include that: a netlist of the data processing circuit is generated according to a design database of the data processing circuit; and the performance check files of the respective timing sequence logic elements are configured.

A second aspect of the disclosure provides an apparatus for checking a data processing circuit, which is configured to execute any one of the methods for checking the data processing circuit of any one of the first aspects of the disclosure.

A third aspect of the disclosure provides an electronic device, which includes:
at least one processor and a memory. The memory stores computer-executable instructions. The at least one processor is configured to execute the computer-executable instructions stored in the memory, so that the at least one processor executes the method for checking the data processing circuit of any one of the first aspects of the disclosure.

A fourth aspect of the disclosure provides a computer-readable storage medium. The computer-readable storage medium stores computer-executable instructions. When a processor executes the computer executable instruction, the method for checking the data processing circuit of any one of the first aspects of the disclosure is implemented.

A fifth aspect of the disclosure provides a computer program product. When the computer program is executed by a processor, the method for checking the data processing circuit of any one of the first aspects of the disclosure is implemented.

In conclusion, according to the method and the apparatus for checking the data processing circuit, and the electronic device provided by the disclosure, performance check files of a plurality of timing sequence logic elements in the data processing circuit are acquired, and the data processing circuit is simulated based on the performance check files of the plurality of timing sequence logic elements, so as to obtain timing sequence information of the respective timing sequence logic elements. Therefore, the disclosure can check the timing sequence of the data processing circuit, which prevents the data processing circuit from failing to pass Command Bus Training (CBT), a relevant regulation check, etc. due to a great difference in timing sequence information, ensures that the data processing circuit can correctly process a signal, and improves the effectiveness of the data processing circuit during designing and using.

### BRIEF DESCRIPTION OF THE DRAWINGS

In order to more clearly illustrate the embodiments of the disclosure or the technical solutions in the prior art, the drawings used in the description of the embodiments or the prior art will be briefly described below. It is apparent that the drawings in the following description are only some embodiments of the disclosure, and other drawings can be obtained by those skilled in the art according to these drawings without any creative work.
FIG. 1 illustrates a schematic structural diagram of a semiconductor device applied by the disclosure.
FIG. 2 illustrates a schematic flowchart of an embodiment of a method for checking a data processing circuit provided by the disclosure.
FIG. 3 illustrates a schematic diagram of a circuit structure of a data processing circuit.
FIG. 4 illustrates a schematic diagram of an embodiment of the timing sequence information provided by the disclosure.
FIG. 5 illustrates a schematic diagram of one type of timing sequence information of all latches in a data processing circuit provided by the disclosure.
FIG. 6 illustrates a schematic diagram of another type of timing sequence information of all latches in the data processing circuit provided by the disclosure.
FIG. 7 illustrates a schematic diagram of yet another type of timing sequence information of all latches in the data processing circuit provided by the disclosure.
FIG. 8 illustrates a schematic flowchart of another embodiment of the method for checking the data processing circuit provided by the disclosure.

### DETAILED DESCRIPTION

To make the objectives, technical solutions, and advantages of the embodiments of the disclosure clearer, the following clearly and completely describes the technical solutions in the embodiments of the disclosure with reference to the accompanying drawings in the embodiments of the disclosure. Apparently, the described embodiments are part rather than all of the embodiments of the disclosure. Based on the embodiments of the disclosure, all other embodiments obtained by those of ordinary skill in the art without creative efforts fall within the scope of protection of the disclosure. In addition, although the contents disclosed in the disclosure are described according to one or several exemplary examples, it is to be understood that a complete embodiment may be formed separately with respect to respective aspects of the contents disclosed.

It is to be noted that the brief description of terms in the disclosure is only for the convenience of understanding the embodiments described below, and is not intended to limit implementation modes of the disclosure. Unless otherwise stated, these terms are to be construed in accordance with their ordinary and common meanings.

The terms "first", "second", etc. in the specification, claims, and the abovementioned drawings of the disclosure are used to distinguish similar or analogous objects or entities and do not necessarily mean to limit the particular sequence or precedence order unless otherwise indicated. It is to be understood that the terms used in such a way may be exchanged under appropriate conditions, for example, can be implemented in a sequence other than the sequences in the drawings or descriptions according to the embodiments of the disclosure.

In addition, the terms "include" and "have" and any variations thereof are intended to cover but not exclusively include, for example, products or devices including a series of components do not need to be limited to those components clearly listed, but may include other components not clearly listed or inherent to these products or devices.

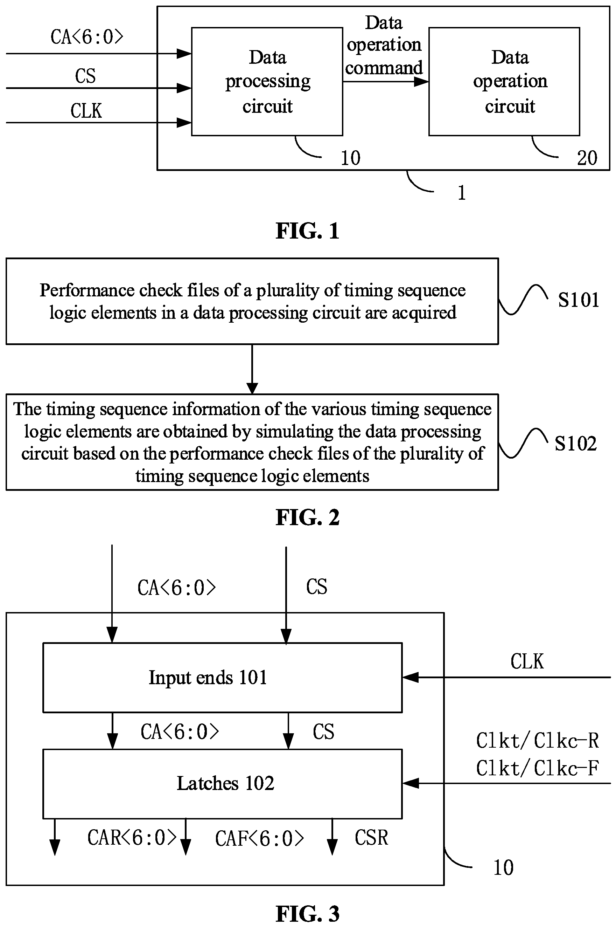

FIG. 1 illustrates a schematic structural diagram of a semiconductor device applied by the disclosure. The semiconductor device 1 as shown in FIG. 1 includes: a data processing circuit 10 and a data operation circuit 20. The data processing circuit 10 may be configured to receive a data signal and a clock signal CLK externally input by the semiconductor device. The data signal includes: a command signal CA<6:0> and a Chip Select (CS) signal. The data processing circuit 10 may be configured to generate a data operation command by performing the processes such as sampling and decoding on the command signal CA<6:0> and the chip select signal CS according to the clock signal CLK. Subsequently, the data processing circuit 10 sends a data operation command to the data operation circuit 20, so that the data operation circuit 20 executes a corresponding operation after receiving the data operation command.

In an embodiment, the semiconductor device 1 as shown in FIG. 1 may adopt an LPDDR standard. When the semiconductor device 1 adopts an LPDDR5 standard, the data processing circuit 10 may receive the input command signal CA<6:0> and a chip select signal CS within a period of time of the clock signal CLK, and perform the processes such as sampling and decoding on the received command signal CA<6:0> and chip select signal to obtain a data operation command.

In order to ensure that the data processing circuit can correctly process the data signal, the timing sequence information of the data processing circuit needs to be checked during designing and testing of the data processing circuit. For example, during checking the data processing circuit, the timing sequence information when the data processing circuit receives the data signal and samples the data signal is checked, so as to prevent the data processing circuit from failing to pass Command Bus Training (CBT), a relevant regulation check, etc. due to a great difference in timing sequence information.

Therefore, the disclosure provides a method for checking a data processing circuit, which can check timing sequence information of the data processing circuit. The technical solution of the disclosure is described in detail below with reference to specific embodiments. The following specific embodiments may be combined. The same or similar concepts or processes will not be elaborated in some embodiments.

FIG. 2 illustrates a schematic flowchart of an embodiment of a method for checking a data processing circuit provided by the disclosure. The method as shown in FIG. 2 may be configured to check the timing sequence information of the data processing circuit 10 as shown in FIG. 1. An execution subject of the method may be an electronic device with relevant processing functions, such as a computer, a server, or a workstation. By the method, a layout of the data processing circuit 10 may be checked by an electronic device in a designing stage of the data processing circuit 10. In subsequent embodiments of the disclosure, the method steps of the disclosure will be described by taking an electronic device as an execution subject, rather than limiting the execution subject.

At S101, the electronic device acquires performance check files of a plurality of timing sequence logic elements in the data processing circuit.

In an embodiment, the electronic device may establish a test platform in advance, and simulate a data processing circuit to be checked in the test platform by using software. The data processing circuit includes at least one timing sequence logic element.

In an embodiment, the abovementioned timing sequence logic element may be an input end (pad) or a latch. For example, FIG. 3 illustrates a schematic diagram of a circuit structure of a data processing circuit. As shown in FIG. 3, the data processing circuit 10 includes: input ends 101 and latches 102. The input ends 101 are configured to receive a command signal CA<6:0> and a chip select signal CS according to a clock signal CLK, and transmit the received command signal CA<6:0> or chip select signal CS to the latch 102. The latch 102 is configured to sample the received command signal CA<6:0> or chip select signal CS according to a sampling signal Clkt/Clktc-R or Clkt/Clktc-F, so that an internal chip select signal CS and internal command signals CAR<6:0> and CAF<6:0> are obtained, and the internal chip select signal CS and the internal command signals CAR<6:0> and CAF<6:0> are transmitted to a subsequent decoder and the like for processing.

At S101, the electronic device may acquire performance check files of a plurality of input ends 101 and a plurality of latches 102 in the data processing circuit 10. The plurality of input ends 101 are respectively connected to the plurality of latches 102. The respective input ends 101 are configured to receive the command signal CA<6:0> or the chip select signal CS, and transmit the command signal CA<6:0> or the chip select signal CS to the latches 102 connected to the input ends 101. The latches 102 sample the command signal CA<6:0> or the chip select signal CS.

In an embodiment, the data processing circuit 10 further includes a receiver. The receiver may be configured to receive a clock signal CLK, and obtain a sampling signal Clkt/Clktc-R or Clkt/Clktc-F based on the clock signal CLK.

In an embodiment, performance check files corresponding to respective timing sequence logic elements may be configured in advance. Timing sequence information of respective timing sequence logic elements can be obtained during simulating from the performance check files.

At S102, the data processing circuit 10 is simulated based on the performance check files of the plurality of timing sequence logic elements obtained in S101, so as to obtain the timing sequence information of the respective timing sequence logic elements in the data processing circuit 10.

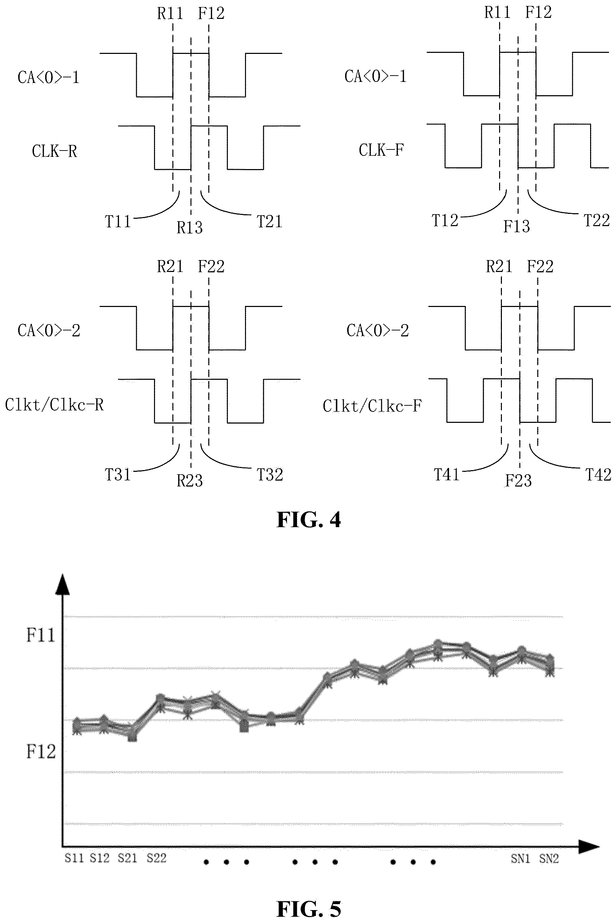

In an embodiment, FIG. 4 illustrates a schematic diagram of an embodiment of the timing sequence information provided by the disclosure, which shows the timing sequence information when the input end 101 receives the data signal based on the clock signal and the latch samples the data signal in the data processing circuit 10

As shown in FIG. 4, taking the input end 101, which receives a CA<0> command bit of the data signal CA<6:0>, in the data processing circuit 10 as an example, a waveform of CA<0> of the received data signal CA<6:0> is represented as CA<0>-1, and a waveform of the clock signal is represented as CLK-R or CLK-F. A waveform of CA<0> of the received data signal CA<6:0> of the latch 102 connected to the input end 101 is represented as CA<0>-2, and a waveform of the clock signal is represented as Clkt/Clktc-R or Clkt/Clktc-F.

In an embodiment, the timing sequence information obtained at S102 includes: a first setup time T11 and a first hold time T21 when the input end 101 receives the CA<0> command bit of the data signal CA<6:0> according to a rising edge R13 of the clock signal CLK-R.

The setup time refers to the shortest time that the received signal needs to remain stable before an effective edge of a clock signal. In an example as shown in FIG. 4, before a rising edge R13 of the clock signal CLK-R, the time that the CA<0> command bit of the data signal CA<6:0> can remain stable is the T11 between the rising edge R11 and the rising edge R13. Thus, the first setup time is T11.

The hold time refers to the shortest time that the received signal needs to keep stable after the effective edge of the clock signal. In an example as shown in FIG. 4, after the rising edge R13 of the clock signal CLK-R, the time that the CA<0> command bit of the data signal CA<6:0> can remain stable is the T21 between the rising edge R13 and a falling edge F12. Then, the first hold time is T21.

In an embodiment, the timing sequence information obtained at S102 further includes: a second setup time T12 and a second hold time T22 when the input end 101 receives the CA<0> command bit of the data signal CA<6:0> according to a falling edge F 13 of a clock signal CLK-F.

In an embodiment, the timing sequence information obtained at S102 further includes: a third setup time T31 and a third hold time T32 when the latch 102 samples the CA<0> command bit of the data signal CA<6:0> according to a rising edge R23 of a sampling signal Clkt/Clktc-R.

In an embodiment, the timing sequence information obtained at S102 further includes: a fourth setup time T41 and a fourth hold time T42 when the latch 102 samples the CA<0> command bit of the data signal CA<6:0> according to a rising edge F23 of a sampling signal Clkt/Clktc-F.

In an embodiment, one or more of the first setup time T11, the first hold time T21, the second setup time T12, the second hold time T22, the third setup time T31, the third hold time T32, the fourth setup time T41, and the fourth hold time T42 of the timing sequence logic element may be obtained at S 102.

It is to be understood that an electronic device may obtained the timing sequence information of each timing sequence logic element by simulating at S102. According to the same example of the input end 101 and the latch 102 in the abovementioned FIG. 4, similarly, the electronic device may obtain the timing sequence information of all input ends and all latches in the data processing circuit 10.

In an embodiment, the obtained timing sequence information of respective timing sequence logic elements in the data processing circuit 10 may be used for checking the data processing circuit.

In conclusion, the method for checking the data processing circuit provided by the embodiments of the disclosure can check the timing sequence of the data processing circuit, which prevents the data processing circuit from failing to pass CBT, a relevant regulation check, etc. due to a great difference in timing sequence information, ensures that the data processing circuit can correctly process a signal, and improves the effectiveness of the data processing circuit during designing and using.

In an embodiment, after the timing sequence information of the respective timing sequence logic elements in the data processing circuit 10 is obtained by the electronic device in the mode as shown in FIG. 2, the obtained timing sequence information of the timing sequence logic elements may also be displayed on a display device. The display device may be a display of the electronic device display and the like.

In conclusion, by the method for checking the data processing circuit provided by the embodiments, the timing sequence information of respective timing sequence logic elements in the data processing circuit can be displayed, so that an operation designer can process the data processing circuit according to the displayed timing sequence information, so that the intelligence degree when the data processing circuit is checked is improved, and the checking efficiency and the user experience can also be improved.

In an embodiment, identifier information and the like of the timing sequence logic elements may also be displayed at the position corresponding to each piece of timing sequence information.

**Table 1**

| | Process 1 | Process 1 | Process 1 | Process 1 | ... |
|---|---|---|---|---|---|
| | Minimum value | Maximum value | Minimum value | Minimum value | |
| Timing sequence information (tls) of input ends 101 | 185 | 185 | 185 | 185 | |
| Timing sequence information (tls) of latches 102 | 183 | 219 | 200 | 238 | |

In an embodiment, the electronic device displays the identifier information and the timing sequence information of the timing sequence logic elements in the form of a table. Taking the input end 101 and the latch 102 that receive the chip select signal CS in the data processing circuit 10 as examples, as shown in Table 1, the maximum value and the minimum value of the setup time (tls) when the input end 101 receives the chip select signal CS by using pins of different processes, and the maximum value and the minimum value of the setup time (tls) when the latch 102 samples the chip select signal CS by using pins of different processes are shown. It is to be noted that, here, only the setup time of a signal is analyzed, but the hold time of the signal is not shown, because the hold time may be obtained by subtracting the setup time from the pulse width of the signal, referring to FIG. 4. In an embodiment, the timing sequence information tls of the input end 101 may be set in a performance check file, for example, in Table 1, the timing sequence information tls of all input ends 101 may be set as 185 ps and the like when the period of the clock signal is 1.25 ns.

It can be seen from Table 1 that, the data signal received by the latch 102 has been processed and transmitted by the input end 101, and the sampling signal received by the latch 102 is the clock signal that has been processed and transmitted by a receiver, so that compared the timing sequence information that the input end 101 receives the data signal according to the clock signal with the timing sequence information that the latch 102 samples the data signal according to the sampling signal, even if the input end 101 and the latch 102 process the same data signal, the timing sequence information that the input end 101 and the latch 102 process the data signal may be different. Therefore, when the electronic device displays the timing sequence information of the data processing circuit 10 on a display device through Table 1, a designer of the data processing circuit 10 may perform the processes such as adjustment on the data processing circuit 10 according to the timing sequence information provided by Table 1, which reduces the difference of the timing sequence information between the latches 102 to keep the timing sequence information between all latches 102 consistent or approximately consistent as much as possible, and reduces the difference of the timing sequence information between the input end 101 and the latch 102 that are connected to keep the timing sequence information between all the input end 101 and the latch 102 consistent or approximately consistent as much as possible.

In an embodiment, the electronic device may also display the identifier information and the timing sequence information of the timing sequence logic elements in the form of graphics, taking all input ends 101 that receive the command signal CA<6:0> and the chip select signal CS and all latches 102 that sample the command signal CA<6:0> and the chip select signal CS in the data processing circuit 10 as an example.

FIG. 5 illustrates a schematic diagram of a type of timing sequence information of all latches 102 in the data processing circuit provided by the disclosure. For example, each curve in FIG. 5 shows the maximum values and the minimum values of the setup time (tls) when a latch 102 samples a data signal for a rising edge of a sampling signal by using pins of different processes. For example, the minimum value S11 of process S1, the maximum value S12 of process S1, the minimum value S21 of process S2, the maximum value S22 of process S2, ....

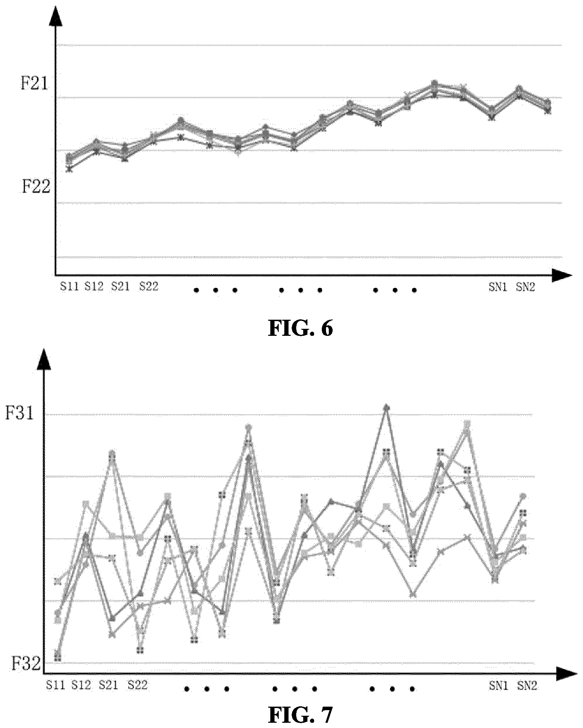

FIG. 6 illustrates a schematic diagram of another type of timing sequence information of all latches 102 in the data processing circuit provided by the disclosure. For example, each curve in FIG. 6 shows the maximum values and the minimum values of the setup time (tls) when a latch 102 samples a data signal for a falling edge of a sampling signal by using pins of different processes. For example, the minimum value S11 of process S1, the maximum value S12 of process S1, the minimum value S21 of process S2, the maximum value S22 of process S2, ....

FIG. 7 illustrates a schematic diagram of yet another type of timing sequence information of all latches 102 in the data processing circuit provided by the disclosure. For example, each curve in FIG. 7 shows the difference between the maximum values and the minimum values of the setup time (tls) when a latch 102 samples a data signal for the rising edge of a sampling signal by using pins of different processes and the maximum values and the minimum values of the setup time (tls) when the latch samples the data signal for the falling edge of the sampling signal by using pins of different processes.

In an embodiment, the timing sequence information that the input ends 101 in the data processing circuit 10 receive the data signal according to the clock signal is the same, so the timing sequence information that the input ends 101 receive the data signal according to the clock signal may not be displayed through the display device. Therefore, when the electronic device displays the timing sequence information of the data processing circuit 10 on a display device through the pictures as shown in FIG. 5 to FIG. 7, a designer of the data processing circuit 10 may perform the processes such as adjustment on the data processing circuit 10 according to the timing sequence information provided by FIG. 5 to FIG. 7, which reduces the difference of the timing sequence information between all latches 102 to keep the timing sequence information between all latches 102 consistent or approximately consistent as much as possible, and reduces the difference of the timing sequence information between the input ends 101 and the latches 102 that are connected to keep the timing sequence information between all input ends 101 and all latches 102 consistent or approximately consistent as much as possible.

In an embodiment, after obtaining the timing sequence information of respective timing sequence logic elements in the data processing circuit 10, the electronic device may also determine whether the data processing satisfies a preset condition through the timing sequence information to replace a designer of the data processing circuit 10 to check the data processing circuit 10, which further improves the intelligence degree during checking of the data processing circuit 10, reduces the labor cost, and can also improve the check efficiency.

In an embodiment, the preset condition that the data processing circuit 10 satisfies includes that: the timing sequence information that all input ends 101 in the data processing circuit receive a data signal according to a clock signal is within a first preset range.

In an embodiment, the preset condition may further include that: the timing sequence information that all latches 102 in the data processing circuit sample the data signal according to a sampling signal is within a second preset range. For example, the maximum values and the minimum values of the timing sequence information tls that all latches in the data processing circuit 10 sample the data signal for a rising edge of the sampling signal as shown in FIG. 5 are within a second preset range of F11 to F12. For another example, the maximum values and the minimum values of the timing sequence information tls that all latches in the data processing circuit 10 sample the data signal for a falling edge of the sampling signal as shown in FIG. 6 are within a second preset range of F21 to F22.

In an embodiment, the preset condition that the data processing circuit 10 satisfies includes that: the difference between the timing sequence information that all input ends receive a data signal according to a clock signal and the timing sequence information that the latches connected to the input ends sample the data signal in the data processing circuit is within a second preset range. For example, referring to FIG. 7, the difference between the timing sequence information that the input ends 101 receive a data signal (CA<6:0> or CS) according to a clock signal CLK and the timing sequence information that the latches 102 sample the data signal according to a sampling signal Clkt/Clktc-R or Clkt/Clktc-F is within a third preset range of F31 to F32. It can be understood that the two pieces of timing sequence information for calculating a timing sequence information difference belong to one category, for example, the difference between a first setup time of the input end 101 and a first setup time of the latch 102 is calculated, and the difference between a first hold time of the input end 101 and a first hold time of the latch 102 is calculated.

It can be understood that the electronic device compares the timing sequence information of all input ends 101 of the data processing circuit 10 with the timing sequence information of all latches 103 connected to the input ends 101 in sequence. In the case that the timing sequence information when all input ends 101 receive a data signal is within the first preset range, the timing sequence information when all latches 102 sample the data signal is within the second preset range, and the difference between the timing sequence information of all input ends 101 and the timing sequence information of the latches 103 connected to the input ends is within the second preset range, it is determined that the data processing circuit 10 satisfies a preset condition. When any of the latches 103 does not satisfy the preset condition, or an input end 101 and a latch 103 do not satisfy the preset condition, it is determined that the data processing circuit 10 do not satisfy the preset condition.

In an embodiment, when the electronic device determines that the data processing circuit 10 satisfies the preset condition, the electronic device may further continue to perform function check on the data processing circuit 10. The function check includes: CBT and/or relevant function checks formulated by a Standard Performance Evaluation Corporation (SPEC), such as tCA2CA check. Then the data processing circuit 10 provided by the disclosure satisfying the preset condition refers to that the data processing circuit 10 can pass the function checks such as the CBT and a relevant regulation check smoothly. The data processing circuit 10 not satisfying the preset condition refers to that the data processing circuit 10 cannot pass the function checks such as the CBT and the relevant regulation check In conclusion, the method for checking the data processing circuit provided by the embodiments of the disclosure can ensure that the data processing circuit 10 can process data more accurately, so that the data processing circuit 10 passes through the CBT and the relevant regulation check smoothly.

In an embodiment, when the electronic device determines that the data processing circuit 10 not satisfies the preset condition, the electronic device may further perform corresponding adjustment on the data processing circuit 10, so as to solve the problem of timing sequence information of the data processing circuit 10, thereby enabling the data processing circuit 10 to satisfy the preset condition.

In an embodiment, the electronic device may specifically adjust the delay of the clock signal and/or the data signal through the data processing circuit 10, so that the data processing circuit can satisfy the preset condition. For example, specifically, the number of the logic circuits for processing the clock signal and/or the data signal of the data processing circuit 10 may be adjusted, so as to adjust the delay of the clock signal and/or the data signal.

In an embodiment, a preset number of logic circuits can be increased or decreased each time after the electronic device determines that the data processing circuit 10 does not satisfy the preset condition. Whether the adjusted data processing circuit 10 satisfies the preset condition is determined again, and the data processing circuit 10 is continued to be adjusted according to the preset number if the data processing circuit 10 does not satisfy the preset condition. Finally, the data processing circuit 10 is adjusted to satisfy the preset condition in an iteration mode.

It can be understood that the electronic device can adjust the logic circuits of each input end 101 and the latch 103 connected thereto in the data processing circuit 10 in sequence. Therefore, the data processing circuit 10 satisfies the preset condition.

In conclusion, the method for checking the data processing circuit provided by the embodiments of the disclosure can automatically adjust the data processing circuit without manual participation when the data processing circuit does not satisfy the preset condition, so that the data processing circuit finally satisfies the preset condition. Therefore, the work of an operation designer during checking is reduced, the labor input is reduced, and the check efficiency is improved in a case of ensuring that the data processing circuit passes the CBT and the relevant regulation check smoothly.

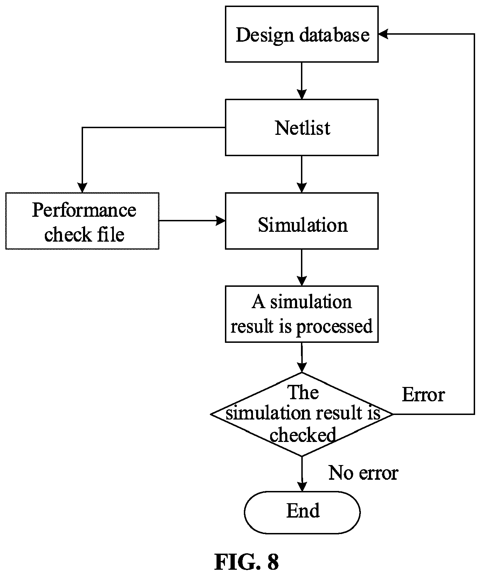

FIG. 8 illustrates a schematic flowchart of another embodiment of the method for checking the data processing circuit provided by the disclosure. FIG. 8 illustrates a specific implementation mode of the timing sequence information when the electronic device determines that the latches sample the data signal according to the sampling signal.

Circuit data of the data processing circuit is acquired from a design database. The circuit data includes a circuit diagram, a layout, and etc. of the data processing circuit.

A netlist of the data processing circuit is obtained according to the circuit data. The netlist is a file in a form of text extracted from the circuit diagram, is used for representing circuit devices and connecting relationships, and may be used for subsequent simulation.

Performance check files corresponding to respective timing sequence logic elements in the data processing circuit are configured.

The timing sequence information of the data processing circuit is simulated by using a CCK setting file and the netlist, a simulated CCK report is obtained, and second timing sequence information is obtained from the simulated report.

The simulated report is processed, and a checking process is ended when it is determined that the timing sequence logic elements that belong to the same path do not have a timing sequence error. Input signals of the timing sequence logic elements that belong to the same path are adjusted and iterative validation is performed when it is determined that the timing sequence logic elements that belong to the same path have a timing sequence error.

In the foregoing embodiments, the method for checking the data processing circuit provided by the embodiments of the disclosure is described. In order to realize respective functions in the method provided by the abovementioned embodiments of the disclosure, the electronic device as the execution subject may include a hardware structure and/or a software module, and the abovementioned respective functions may be realized by realized in the form of the hardware structure, the software module, or the hardware structure and the software module. Whether a certain function of respective functions above is executed in a mode of a hardware structure, a software module, or the hardware structure and the software module depends on a specific application and design constraints of the technical solution.

For example, the disclosure further provides an apparatus for checking a data processing circuit, which includes: an acquisition module and a simulation module. The acquisition module is configured to acquire performance check files of a plurality of timing sequence logic elements in the data processing circuit. The simulation module is configured to simulate the data processing circuit based on the performance check files of the plurality of timing sequence logic elements, as to obtain timing sequence information of the respective timing sequence logic elements.

In an embodiment of the disclosure, the plurality of timing sequence logic elements include: input ends and latches. An input end is connected to a respective latch.

In an embodiment of the disclosure, the timing sequence information includes at least one of: a first setup time and a first hold time of a rising edge of a clock signal when the input end receives a data signal according to the clock signal; a second setup time and a second hold time of a falling edge of the clock signal when the input end receives the data signal according to the clock signal; a third setup time and a third hold time of a rising edge of a sampling signal when the latch samples the data signal according to the sampling signal; and a fourth setup time and a fourth hold time of a falling edge of the sampling signal when the latch samples the data signal according to the sampling signal.

In an embodiment of the disclosure, the apparatus for checking the data processing circuit further includes: a display module, configured to display identifier and timing sequence information of the timing sequence logic elements.

In an embodiment of the disclosure, the apparatus for checking the data processing circuit further includes: a processing circuit, configured to determine whether the data processing circuit satisfies the preset condition according to the timing sequence information.

In an embodiment of the disclosure, the preset condition includes that: the difference between the timing sequence information when all latches in the data processing circuit sample the data signal is within a first preset range.

In an embodiment of the disclosure, the preset condition include that: the difference between the timing sequence information that the input end receives the data signal and the timing sequence information that the latch samples the data signal is within a second preset range. The input end is connected to the latch.

In an embodiment of the disclosure, the apparatus for checking the data processing circuit further includes: a check module, configured to perform CBT and/or a SPEC check on the data processing circuit when it is determined that the data processing circuit satisfies the preset condition.

In an embodiment of the disclosure, the apparatus for checking the data processing circuit further includes: an adjustment module, configured to adjust the delay of the clock signal and/or the data signal when it is determined that the data processing circuit does not meet the preset condition, so that the data processing circuit satisfies the preset condition.

In an embodiment of the disclosure, the apparatus for checking the data processing circuit further includes: a configuration module, configured to generate a netlist of the data processing circuit according to a design database of the data processing circuit; and configure the performance check files of the respective timing sequence logic elements.

The implementation mode and principle of the apparatus for checking the data processing circuit provided by the embodiments of the disclosure can refer to the method for checking the data processing circuit provided by the foregoing embodiment of the disclosure, and will not be elaborated.

It is to be noted that the above division of each module of the above apparatus should be understood as only a division of logical functions, and during practical implementation, the modules may be completely or partially integrated to a physical entity, or may be separated physically. All these modules may be implemented in a form of calling software through a processing element, or may be implemented in a hardware form, or part modules may be implemented in form of calling the software through the processing element and part modules are implemented in the hardware form. For example, the processing module may be a processing element configured independently, or may be implemented by integrating to a certain chip of the abovementioned apparatus, and in addition, may be stored in a memory of the abovementioned apparatus in a form of program code for a certain processing element of the abovementioned apparatus to call and execute the function of the abovementioned determination module. The other modules are implemented in a similar mode. In addition, these modules may be completely or partially integrated or implemented independently. The processing element described here may be an integrated circuit with a signal processing capability. In an implementation process, respective steps of the abovementioned method or respective modules abovementioned may be completed by an integrated logic circuit of hardware in the processing unit or an instruction in the form of software.

For example, these modules above may be configured as one or more integrated circuits for implementing the above method, for example, one or more Application Specific Integrated Circuits (ASICs), or one or more Digital Signal Processors (DSPs), or one or more Field Programmable Gate Arrays (FPGAs). For another example, when a certain module above is implemented in a form of calling a program code through a processing element, the processing element may be a generalpurpose processor, for example, a Central Processing Unit (CPU) or another processor capable of calling program codes. For another example, these modules may be integrated together and implemented in a form of a System-On-a-Chip (SOC).

In the abovementioned embodiments, the modules may be completely or partially implemented through software, hardware, firmware, or any combination thereof. During implementation with the software, these modules may be implemented completely or partially in a form of a computer program product. The computer program product includes one or more computer instructions. When the computer program Instruction are loaded and executed on a computer, the processes or functions according to the embodiments of the disclosure are generated completely or partially. The computer may be a universal computer, a dedicated computer, a computer network, or other programmable apparatuses. The computer instruction may be stored in a computer-readable storage medium or transmitted from one computer-readable storage medium to another. For example, the computer instruction may be transmitted from one website, computer, server or data center to another website, computer, server or data center in a wired (for example, coaxial cable, optical fiber and Digital Subscriber Line (DSL)) or wireless (for example, infrared, wireless and microwave) manner. The computer-readable storage medium may be any available medium for the computer or a data storage device, such as a server and a data center, including one or more integrated available media. The available medium may be a magnetic medium (for example, a floppy disk, a hard disk and a magnetic tape), an optical medium (for example, a Digital Video Disc (DVD)), a semiconductor medium (for example, a Solid State Disk (SSD)), or the like.

For example, the disclosure further provides an electronic device, which includes: a processor and a memory. The memory stores a computer program. The computer program may execute a computer program. When the processor executes the computer program, the processor may be configured to execute the steps in any method for checking a data processing circuit in the foregoing embodiments of the disclosure.

The disclosure further provides a computer-readable storage medium. The computer-readable storage medium stores a computer program. The computer program may be configured to execute the steps in any method for checking a data processing circuit in the foregoing embodiments of the disclosure when being executed.

The embodiments of the disclosure further provide a chip for executing a command. The chip is configured to execute the steps of any method for checking a data processing circuit in the foregoing embodiments of the disclosure.

Those of ordinary skill in the art can understand that all or part of the steps for implementing the abovementioned respective method embodiments may be completed by hardware relevant to a program instruction. The foregoing program may be stored in a computer-readable storage medium. When being executed, the program executes the steps including the abovementioned respective method embodiments. The foregoing storage medium includes: respective media capable of storing program codes, such as a ROM, a RAM, a magnetic disc, or a compact disc.

Finally, it should be noted that the foregoing embodiments are merely intended for describing the technical solutions of the disclosure, instead of limiting the disclosure. Although the disclosure is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the disclosure.

## Claims

1. A method for checking a data processing circuit, comprising:
acquiring performance check files of a plurality of timing sequence logic elements in the data processing circuit; and
obtaining timing sequence information of the respective timing sequence logic elements by simulating the data processing circuit based on the performance check files of the plurality of timing sequence logic elements.

2. The method of claim 1, wherein
the plurality of timing sequence logic elements comprise: input ends and latches; and each input end is connected to a respective latch.

3. The method of claim 2, wherein the timing sequence information comprises at least one of:
a first setup time and a first hold time of a rising edge of a clock signal when the input end receives a data signal according to the clock signal;
a second setup time and a second hold time of a falling edge of the clock signal when the input end receives the data signal according to the clock signal;
a third setup time and a third hold time of a rising edge of a sampling signal when the latch samples the data signal according to the sampling signal; and
a fourth setup time and a fourth hold time of a falling edge of the sampling signal when the latch samples the data signal according to the sampling signal.

4. The method of claim 3, wherien after obtaining the timing sequence information of the respective timing sequence logic elements, the method further comprises:
displaying identifiers and the timing sequence information of the timing sequence logic elements on a display device.

5. The method of claim 4, wherein after displaying the identifiers and the timing sequence information of the timing sequence logic elements on the display device, the method further comprises:
determining whether the data processing circuit satisfies a preset condition according to the timing sequence information.

6. The method of claim 5, wherein the preset condition comprises that:
the timing sequence information of all input ends of the data processing circuit is within a first preset range.

7. The method of claim 6, wherein the preset condition further comprises that:
the timing sequence information of all latches of the data processing circuit is within a second preset range.

8. The method of claim 7, wherein the preset condition further comprises that:
in the data processing circuit, a difference between the timing sequence information of all input ends and the timing sequence information of the latches connected to the input ends is within a third preset range.

9. The method of any one of claims 5 to 8, further comprising:
performing function check on the data processing circuit in response to determining that the data processing circuit satisfies the preset condition.

10. The method of any one of claims 3 to 8, further comprising:
adjusting a delay of the clock signal and/or the data signal in response to determining that the data processing circuit does not satisfy the preset condition, so that the data processing circuit satisfies the preset condition.

11. The method of any one of claims 5 to 8, wherein before acquiring the performance check files of the plurality of timing sequence logic elements in the data processing circuit, the method further comprises:
generating a netlist of the data processing circuit according to a design database of the data processing circuit; and
configuring the performance check files of the respective timing sequence logic elements.

12. An apparatus for checking a data processing circuit, configured to execute the method for checking the data processing circuit of any one of claims 1 to 11.

13. An electronic device, comprising: at least one processor and a memory, wherein the memory stores computer-executable instructions; and the at least one processor is configured to execute the computer-executable instructions stored in the memory, so that the at least one processor executes the method for checking the data processing circuit of any one of claims 1 to 11.

14. A computer-readable storage medium, wherein the computer-readable storage medium stores computer-executable instructions that when executed by a processor, implement the method for checking the data processing circuit of any one of claims 1 to 11.

15. A computer program product, comprising a computer program that when executed by a processor, implement the method for checking the data processing circuit of any one of claims 1 to 11.
